(19) Europäisches Patentamt
European Patent Office
Office européen des brevets

(11) Numéro de publication: **0 266 245 B1**

(12) **FASCICULE DE BREVET EUROPEEN**

(45) Date de publication de fascicule du brevet: **07.08.91**

(51) Int. Cl.$^5$: **H01G 4/18**

(21) Numéro de dépôt: **87402219.7**

(22) Date de dépôt: **06.10.87**

(54) **Condensateur du type à film de polymère et à stabilité en température élevée.**

(30) Priorité: **10.10.86 FR 8614151**

(43) Date de publication de la demande: **04.05.88 Bulletin 88/18**

(45) Mention de la délivrance du brevet: **07.08.91 Bulletin 91/32**

(84) Etats contractants désignés: **DE FR GB IT**

(56) Documents cités:
**DD-A- 65 313**
**GB-A- 2 039 929**
**US-A- 3 649 892**

**REVUE GENERALE DE L'ELECTRICITE, vol. 83, no. 5, mai 1974, pages 299-304, Paris, FR; E. REESE: "Isolants en feuilles dans l'électrotechnique"**

(73) Titulaire: **COMPAGNIE EUROPEENNE DE COMPOSANTS ELECTRONIQUES LCC**
**50, rue Jean -Pierre Timbaud B.P. 301**
**F-92402 Courbevoie(FR)**

(72) Inventeur: **Bernard, Gilles**
**THOMSON-CSF SCPI 19, avenue de Messine**
**F-75008 Paris(FR)**
Inventeur: **Bureau, Jean-Marc**
**THOMSON-CSF SCPI 19, avenue de Messine**
**F-75008 Paris(FR)**
Inventeur: **Dubois, Jean-Claude**
**THOMSON-CSF SCPI 19, avenue de Messine**
**F-75008 Paris(FR)**
Inventeur: **Zattara, Jean-Luc**
**THOMSON-CSF SCPI 19, avenue de Messine**
**F-75008 Paris(FR)**

(74) Mandataire: **Ruellan-Lemonnier, Brigitte et al**
**THOMSON-CSF SCPI**
**F-92045 PARIS LA DEFENSE CEDEX 67(FR)**

**EP 0 266 245 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des condensateurs du type à film de polymère et possédant une stabilité en température élevée, comme connue de le REVUE GENERALE DE L'ELECTRICITE, vol. 83, no. 5, mai 1974, pages 299-304, Paris, FR; E. REESE: "Isolants en feuilles dans l'électrotechnique"

Il est connu de réaliser des condensateurs à base de films diélectriques minces métallisés et empilés, les films étant en un polymère tel que le polyester, le polycarbonate ou le polypropylène. Les permittivités diélectriques de ces polymères sont de l'ordre de 3. on veut toujours miniaturiser les composants et donc réaliser des capacités spécifiques élevées. L'un des moyens pour y parvenir est de diminuer l'épaisseur du film de diélectrique comme le mentionne le brevet FR 2 548 440. Selon ce brevet, le film mince de polymère est déposé par enduction d'une solution de ce polymère (procédé laque).

Un autre problème important est celui de la stabilité en température des différents paramètres, caractéristiques d'un condensateur : la valeur de la capacité (c'est-à-dire la permittivité du diélectrique), le facteur de pertes qui doit rester faible et la résistance d'isolement qui doit rester élevée. Il est difficile de trouver des polymères qui possèdent de telles qualités d'autant plus que l'on voudrait pouvoir utiliser ces condensateurs pour des températures de plus en plus élevées.

Afin de pallier ces inconvénients, l'invention propose d'utiliser comme film diélectrique un polymère tel que les polyphénylquinoxalines ou les polyhydantoïnes. Un tel film peut être obtenu par coulage à partir de solutions organiques ou par enduction (laquage). L'invention a donc pour objet un condentateur du type à film de polymère, caractérisé en ce que ledit polymère est un polyphénylquinoxaline ou un polyhydantoïne de formule:

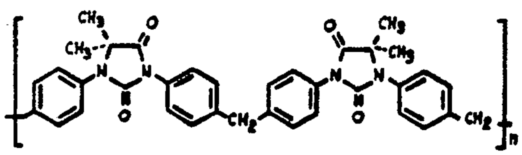

L'invention a également pour objet un condensateur, caractérisé en ce qu'il est formé d'une pluralité de condensateurs élémentaires, chaque condensateur élémentaire étant constitué d'un élément dudit film de polymère compris entre une première armature et une seconde armature, des électrodes reliant les premières armatures entre elles et les secondes armatures être elles.

L'invention sera mieux comprise et d'autres avantages apparaîtront au moyen de la description qui va suivre et des figures annexées parmi lesquelles :

- La figure 1 représente le schéma de synthèse du polyphénylquinoxaline,
- La figure 2 est un diagramme donnant le poids résiduel de polyphénylquinoxaline en fonction de la température,
- La figure 3 est un diagramme donnant la permittivité relative du polyphénylquinoxaline en fonction de la température,
- La figure 4 est un diagramme donnant le facteur de pertes du polyphénylquinoxaline en fonction de la température,
- La figure 5 représente le schéma de synthèse du polyhydantoïne,
- La figure 6 est un diagramme donnant le poids résiduel de polyhydantoïne en fonction de la température,
- La figure 7 est un diagramme donnant la permittivité relative du polyhydantoïne en fonction de la température,
- La figure 8 est un diagramme donnant le facteur de pertes du polyhydantoïne en fonction de la température,
- Les figures 9 à 12 sont des exemples de réalisation de condensateurs selon l'invention.

Le premier polymère considéré est un polyphénylquinoxaline (PPQ). Comme il sera démontré plus loin, il possède des propriétés diélectriques intéressantes : une bonne permittivité, un faible facteur de pertes et une résistance d'isolement élevée. De plus, ces propriétés présentent une remarquable stabilité en fonction de la température (jusqu'à 350° C environ). Enfin, ce polymère est soluble, ce qui permet son dépôt en couches minces par des méthodes de coulage ou d'enduction.

La figure 1 représente la synthèse du polyphénylquinoxaline. Ce polymère, dont la formule est représentée sous la référence 1, est préparé par cyclisation d'une tétraamine 2 et d'une tétracétone 3. Le taux de cyclisation est voisin de 100 %. Le PPQ est soluble dans le solvant de préparation, le méta-crésol. Il peut être précipité et redissous dans d'autres solvants comme le tétrachloro 1-1-2-2 éthane. Cette

solubilité permet de disposer de solutions de polymère dans une large gamme de viscosités permettant le dépôt de films minces d'épaisseur contrôlée. Après séchage, on peut obtenir, selon la méthode de mise en oeuvre, des films homogènes autoportés ou couvrant un support et présentant d'excellentes propriétés mécaniques, thermiques et diélectriques.

Le PPQ est un polymère thermostable infusible. Il se dégrade avant de fondre.

La figure 2 représente un diagramme résultant de l'analyse thermogravimétrique. La courbe 4 donne le poids résiduel P en fonction de la température T exprimée en degrés Celsius. Sa température de dégradation à l'air (définie comme la température correspondant à l'intersection des tangentes aux deux parties de la courbe 4) est d'environ 550 °C. Il s'agit essentiellement d'une pyrolyse. En isotherme, il perd 10 % en masse en 1 500 heures à 300 °C et en 1 000 heures à 350 °C. Il présente une transition vitreuse vers 350 °C (révélée par analyse thermique différentielle et analyse thermomécanique). Son module d'élasticité est de $8.10^9 N/m^2$. Son coefficient de dilatation thermique de $6{,}5.10^{-5}/°C$ le rend compatible avec un substrat métallique.

Les propriétés diélectriques du PPQ en dessous de la température de transition vitreuse (350 °C) sont d'une remarquable stabilité.

La figure 3 est un diagramme indiquant l'évolution de la permittivité relative $\epsilon$ du PPQ en fonction de la température T exprimée en degrés Celsius. La courbe 5 concerne un film préparé à partir du méta-crésol et testé à la fréquence de 1 kHz. La courbe 6 concerne un film préparé également à partir du méta-crésol mais testé à 10 kHz. La courbe 7 concerne un film préparé à partir du tétrachloréthane et testé à 1 kHz. D'après ces courbes on constate que la permittivité varie très peu de 0 à 350 °C. Par exemple, pour la courbe 5, la permittivité varie entre 2,6 et 2,8 lorsque la température varie entre - 50 et + 350 °C.

La figure 4 est un diagramme montrant l'évolution du facteur de pertes tg $\delta$ du PPQ en fonction de la température exprimée en degrés Celsius. La courbe 8 concerne un film préparé à partir du méta-crésol et testé à 1 kHz. La courbe 9 concerne le même film mais testé à 10 kHZ. D'après ces courbes, on constate que le facteur de pertes est inférieur à $10^{-3}$ entre 0 et 300 °C.

La résistivité transversale du PPQ est très élevée : de l'ordre de $3.10^{17} \Omega$ .cm pour des valeurs de tensions continues allant de 0 à 100 V.

Le second polymère considéré est le polyhydantoïne (PH). Le polyhydantoïne se prépare selon le schéma de synthèse représenté à la figure 5. Il se prépare par polycondensation d'un di-isocyanate 10 et d'un bis-glycinate 11 dans le méta-crésol à 220 °C. On obtient après le produit intermédiaire 12 le polyhydantoïne 13.

Le PH est soluble dans le solvant de préparation, le méta-crésol. Il peut être précipité et redissous dans d'autres solvants comme le dichlorométhane. Cette solubilité permet de disposer de solutions de polymère dans une large gamme de viscosités permettant le dépôt de films minces d'épaisseur contrôlée. Après séchage on peut obtenir, selon la méthode de mise en oeuvre, des films homogènes autoportés ou couvrant un support et présentant d'excellentes propriétés mécaniques, thermiques et diélectriques.

Le PH est un polymère thermostable infusible. Il se dégrade avant de fondre.

La figure 6 représente un diagramme résultant de l'analyse thermogravimétrique. Les courbes 14 et 15 donnent le poids résiduel P en fonction de la température T exprimée en degrés Celsius. La courbe 14 correspond à un échantillon préparé à partir du méta-crésol et la courbe 15 à un échantillon préparé à partir du dichlorométhane. Leur température de dégradation à l'air est d'environ 470 °C pour l'échantillon correspondant à la courbe 14 et 430 °C pour l'échantillon correspondant à la courbe 15. Il s'agit essentiellement d'une pyrolyse. En isotherme il perd 10 % en masse à 300 °C en 30 heures. Il présente une transition vitreuse vers 210 °C lorsqu'il est préparé à partir du dichlorométhane et vers 250 °C lorsqu'il est préparé à partir du méta-crésol (par analyse thermique différentielle et analyse thermomécanique). Son coefficient de dilatation thermique varie entre $11.10^{-5}/°C$ (préparation à partir du méta-crésol) et $12.10^{-5}/°C$ (préparation à partir du dichlorométhane) et le rend compatible avec un substrat métallique.

La figure 7 est un diagramme indiquant l'évolution de la permittivité relative $\epsilon$ du PH en fonction de la température T exprimée en degrés Celsius. La courbe 16 concerne un film préparé à partir du méta-crésol et testé à 10 kHz sous air. La courbe 17 concerne un film préparé à partir du dichlorométhane et testé à 1kHz. La courbe 16 montre une remarquable stabilité de la permittivité entre 3,2 et 3,3 pour des températures variant entre - 80 et + 280 °C. La courbe 17 montre une stabilité très stable à une valeur proche de 3,4 pour des températures variant de 0 à 250 °C. A partir de 270 °C la permittivité augmente rapidement.

La figure 8 est un diagramme montrant l'évolution du facteur de pertes tg $\delta$ du PH en fonction de la température exprimée en degrés Celsius. La courbe 20 concerne un film préparé à partir du méta-crésol et testé à 10 kHz sous air. D'après cette courbe on constate que le facteur de pertes reste d'une stabilité remarquable et inférieur à $2.10^{-3}$ de 0 à 260 °C puis qu'il augmente rapidement au-delà de cette

température. La courbe 21 concerne un film préparé également à partir du méta-crésol et testé à 1 kHz sous air. Cette courbe montre que le facteur de pertes reste compris entre $10^{-3}$ et $2.10^{-3}$ pour des températures variant de 0 à 270° C. La courbe 22 concerne un film préparé à partir du dichlorométhane et testé à 1 kHz sous air. Cette courbe montre que le facteur de pertes reste inférieur à $2.10^{-3}$ de 0 à 180° C puis augmente rapidement avec la température.

La résistivité transversale des films de PH est très élevée : de l'ordre de $0,45.10^{17}\,\Omega$.cm pour des valeurs de tensions continues allant de 0 à 100 V lorsqu'ils sont préparés à partir du méta-crésol. Cette résistivité double de valeur lorsque le PH est préparé dans le dichlorométhane.

Ces deux polymères (PPQ et PH) peuvent être utilisés pour réaliser des condensateurs. Le film diélectrique utilisé peut être un film obtenu par coulée à partir de solutions organiques. Ces films peuvent être exempts de toute contrainte ou étirés longitudinalement et/ou transversalement. Leurs épaisseurs peuvent varier de 1,5 à 100µ . Ils peuvent être intégrés à toute technologie de réalisation de condensateurs, bobinage ou empilage selon les techniques de l'art connu. Les films peuvent être employés nus ou déjà métallisés.

La figure 9 représente un exemple de réalisation. Les films 30 en PPQ ou en PH sont nus et enserrés entre des armatures métalliques de rang impair 31 et de rang pair 32. L'empilement ainsi constitué reçoit des métallisations latérales 33 et 34 reliant respectivement les armatures de rang impair 31 entre elles et les armatures de rang pair 32 entre elles.

La figure 10 représente un autre exemple de réalisation. Les films 40 en PPQ ou en PH sont métallisés par de l'aluminium, du zinc ou du cuivre sur l'une de leur face. Ces métallisations 41 et 42 sont réalisées partiellement de façon à laisser subsister une marge latérale alternée. Les métallisations 41 débouchant d'un même côté de l'empilement sont reliées entre elles par une métallisation latérale 43. Les métallisations 42 débouchant de l'autre côté de l'empilement sont reliées entre elles par une métallisation latérale 44.

Des condensateurs peuvent être réalisés à partir de films supports ou d'armatures enduits de PPQ ou de PH. Ces dépôts diélectriques d'épaisseur variant de 0,5 à 100µ sont obtenus par des techniques classiques d'enduction ou laquage (flexographie, reverse-roll, etc.) à partir de solutions organiques. Ces films supports ou ces armatures sont ensuite bobinés ou empilés selon les techniques usuelles.

La figure 11 représente un exemple de réalisation. Les armatures 51 et 52 (en aluminium, en étain ou en zinc) sont enduites d'une couche 50 de PPQ ou de PH. Elles sont empilées ou bobinées de façon à provoquer un décalage latéral entre les armatures paires 52 et impaire 51. L'empilement ainsi constitué reçoit des métallisations latérales 53 et 54 reliant respectivement les armatures de rang impair 51 entre elles et les armatures de rang pair 52 entre elles.

La figure 12 représente un autre exemple de réalisation. Les films supports 60 sont recouverts sur chaque face de métallisations 61 et 62. Des marges latérales subsistent alternativement sur chaque face du film support 60. La métallisation 61 est enduite d'une couche 63 de PPQ ou de PH. De même la métallisation 62 est enduite d'une couche 64 du même polymère thermostable. L'empilement de condensateurs élémentaires ainsi constitué reçoit des métallisations latérales 65 et 66 reliant respectivement les métallisations de rang impair 61 et les métallisations de rang pair 62 entre elles. Le film support utilisé peut être lui-même un thermostable du type PH, PPQ, polyimide, polytétrafluoroéthylène ou non thermostable comme le polycarbonate, le polyéthylène térephtalate, etc.

L'étape de stabilisation thermique des condensateurs s'effectue par étuvage au stade semi-fini ou fini, à des températures dépendant des matériaux utilisés et pour des durées variant de 1 heure à 24 heures. Pour le PPQ cette température est de l'ordre de 300° C et pour le PH elle est de l'ordre de 250° C.

## Revendications

1. Condensateur du type à film de polymère, caractérisé en ce que ledit polymère est un polyphénylquinoxaline ou un polyhydantoïne de formule:

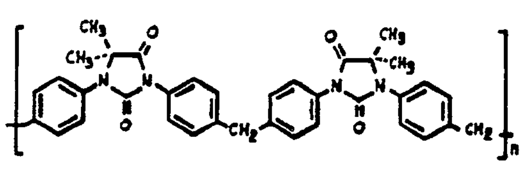

2. Condensateur selon la revendication 1, caractérisé en ce qu'il est formé d'une pluralité de condensateurs élémentaires, chaque condensateur élémentaire étant constitué d'un élément dudit film de polymère compris entre une première armature et une seconde armature, des électrodes reliant les premières armatures entre elles et les secondes armatures entre elles.

3. Condensateur selon la revendication 2, caractérisé en ce que le film de polymère (30) est employé nu et que chaque élément dudit film est enserré entre des premières (31) et des secondes (32) armatures.

4. Condensateur selon la revendication 2, caractérisé en ce que le film de polymère (40) est métallisé sur une de ses faces, cette métallisation jouant le rôle de premières (41) et de secondes (42) armatures.

5. Condensateur selon la revendication 2, caractérisé en ce que ledit film de polymère est constitué de dépôts (50) effectués sur les premières (51) et secondes (52) armatures.

6. Condensateur selon la revendication 5, caractérisé en ce que chaque face principale desdites armatures supporte un dépôt de polymère.

7. Condensateur selon la revendication 2, caractérisé en ce que les armatures sont constituées de métallisations (61. 62) déposés sur un film support (60), les métallisations étant elles-mêmes enduites de couches dudit polymère (63,64).

8. Condensateur selon la revendication 7, caractérisé en ce que le film support (60) est également du type polyphénylquinoxaline ou polyhydantoïne, du polyimide ou du polytétrafluoroéthylène.

9. Condensateur selon la revendication 7, caractérisé en ce que le film support (60) est en polycarbonate ou en polyéthylène térephtalate.

## Claims

1. A capacitor of the polymer film type, characterized in that the said polymer is a polyphenylquinoxaline or a polyhydantoin of the formula:

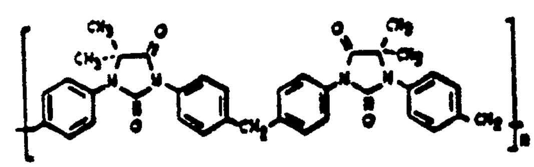

2. The capacitor as claimed in claim 1, characterized in that it is made up of a plurality of elementary capacitors, each elementary capacitor being constituted by one element of the said polymer film comprised between a first mounting means and a second mounting means, by electrodes connecting the first mounting means with each other and the second mounting means with each other.

3. The capacitor as claimed in claim 2, characterized in that the film of polymer (30) is utilized in a bare condition and in that each element of the said film is gripped between the first (31) and the second (32) mounting means.

4. The capacitor as claimed in claim 2, characterized in that the film of polymer (40) is metallized on one of its surfaces, said metallized layer playing the role of the first (41) and of the second (42) mounting means.

5. The capacitor as claimed in claim 2, characterized in that the said film of polymer is constituted by deposits (50) produced on the first (51) and second (52) mounting means.

6. The capacitor as claimed in claim 5, characterized in that each main surface of the said mounting means supports a deposit of polymer.

7. The capacitor as claimed in claim 5, characterized in that the mounting means are constituted by metallized layers (61 and 62) deposited on a support film (60), the metallized themselves being coated with layers of the said polymer (63 and 64).

8. The capacitor as claimed in claim 7, characterized in that the support film (60) is also of the polyphenylquinoxaline, polyhydantoin, polyimide or polytetrafluoroethylene type.

9. The capacitor as claimed in claim 7, characterized in that the support film (60) is constituted by a polycarbonate or polyethylene.

**Patentansprüche**

1. Kondensator von Polymerfilmtyp, dadurch gekennzeichnet, daß das Polymer ein Polyphenylchinoxalin oder Polyhydantoin mit der folgenden Formel ist:

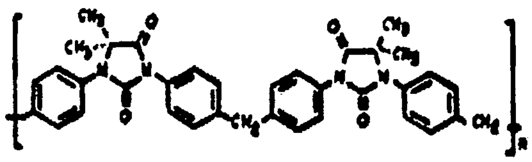

2. Kondensator gemäß Anspruch 1, dadurch gekennzeichnet, daß er aus einer Mehrzahl von Elementarkondensatoren gebildet wird, wobei jeder Elementarkondensator aus einem zwischen einer ersten Ummantelung und einer zweiten Ummantelung enthaltenen Element des Polymerfilms gebildet wird, wobei Elektroden die ersten Ummantelungen miteinander und die zweiten Ummantelungen miteinander verbinden.

3. Kondensator gemäß Anspruch 2, dadurch gekennzeichnet, daß der Polymerfilm (30) blank verwendet wird jedes Element des Films zwischen den ersten (31) und den zweiten (32) Ummantelungen eingeschlossen ist.

4. Kondensator gemäß Anspruch 2, dadurch gekennzeichnet, daß der Polymerfilm (40) auf einer seiner Seiten mit einer Metallschicht bedeckt wird, wobei diese Metallschicht die Rolle der ersten (41) und der zweiten (42) Ummantelungen spielt.

5. Kondensator gemäß Anspruch 2, dadurch gekennzeichnet, daß der Polymerfilm aus Niederschlägen (50) gebildet wird, die auf den ersten (51) und zweiten (52) Ummantelungen erzeugt werden.

6. Kondensator gemäß Anspruch 5, dadurch gekennzeichnet, daß jede Hauptseite der Ummantelungen einen Niederschlag des Polymers trägt.

7. Kondensator gemäß Anspruch 2, dadurch gekennzeichnet, daß die Ummantelungen aus Metallschichten (61, 62) gebildet werden, die auf einem Trägerfilm (60) niedergeschlagen werden, wobei die Metallschichten selbst mit Schichten des Polymers (63, 64) überzogen sind.

8. Kondensator gemäß Anspruch 7, dadurch gekennzeichnet, daß der Trägerfilm (60) ebenfalls vom Polyphenylchinoxalin-Typ oder vom Polyhydantoin-Typ, vom Polyimid-Typ oder vom Polytetrafluorethylen-Typist.

9. Kondensator gemäß Anspruch 7, dadurch gekennzeichnet, daß der Trägerfilm (60) aus Polycarbonat oder aus Polyethylen-Terephthalat ist.

FIG_1

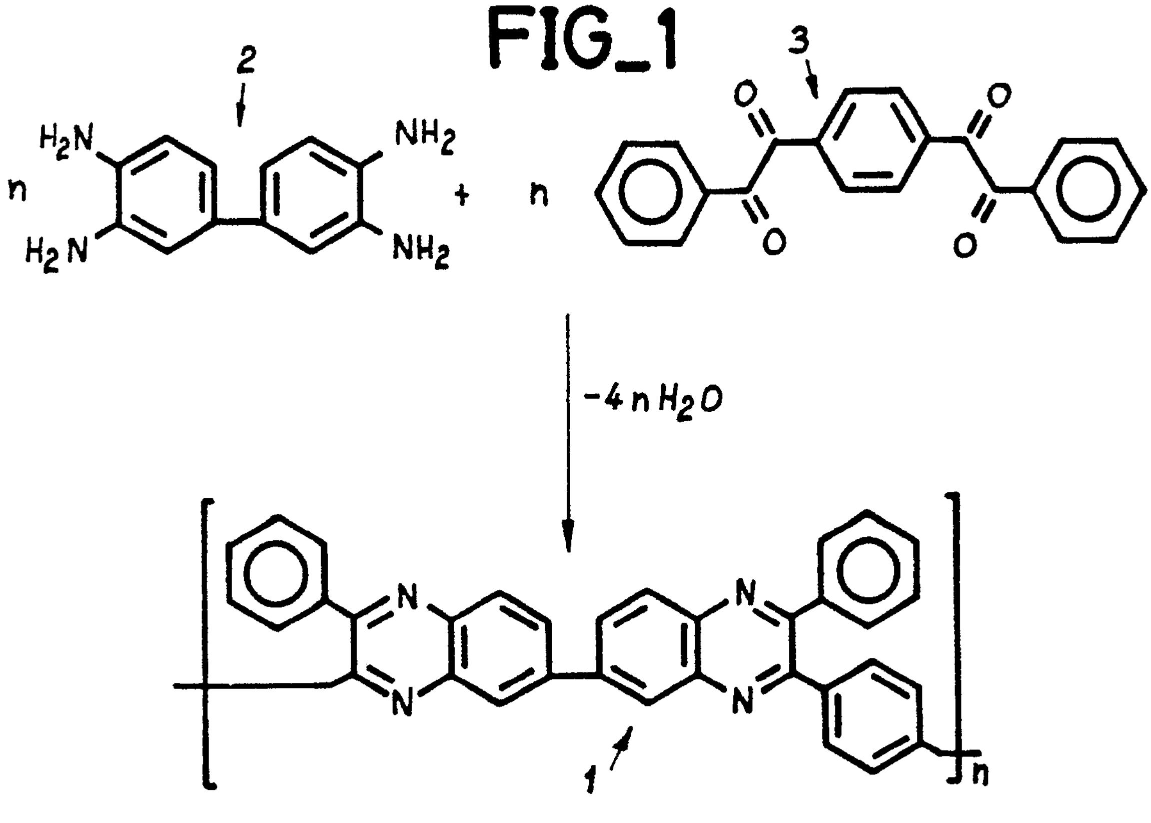


FIG_2

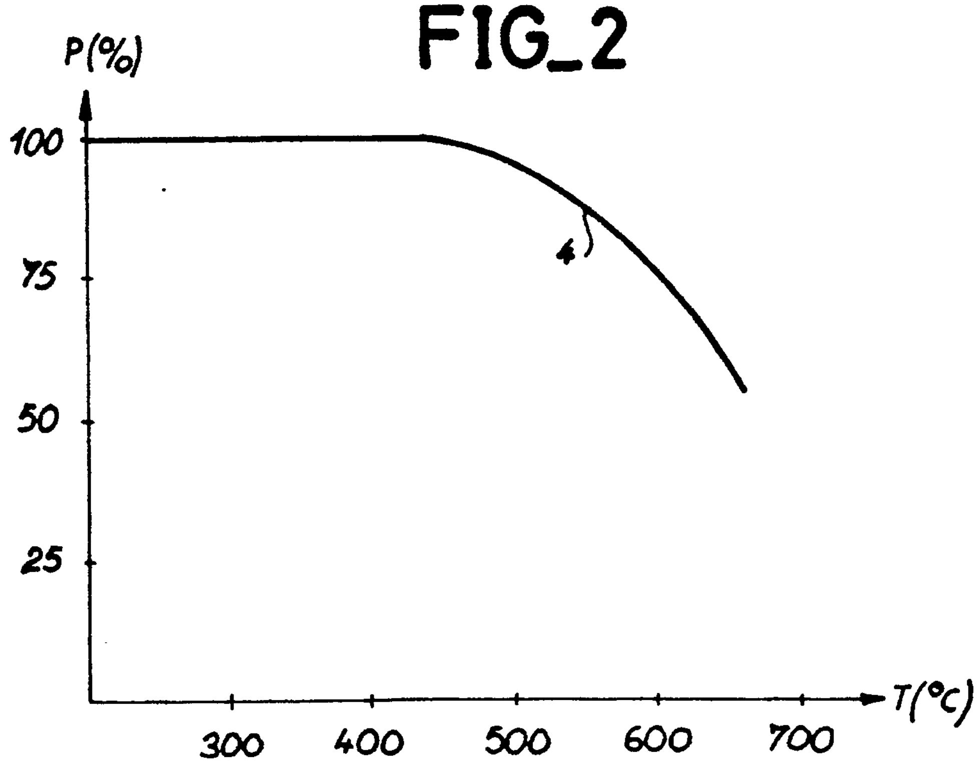

FIG_3

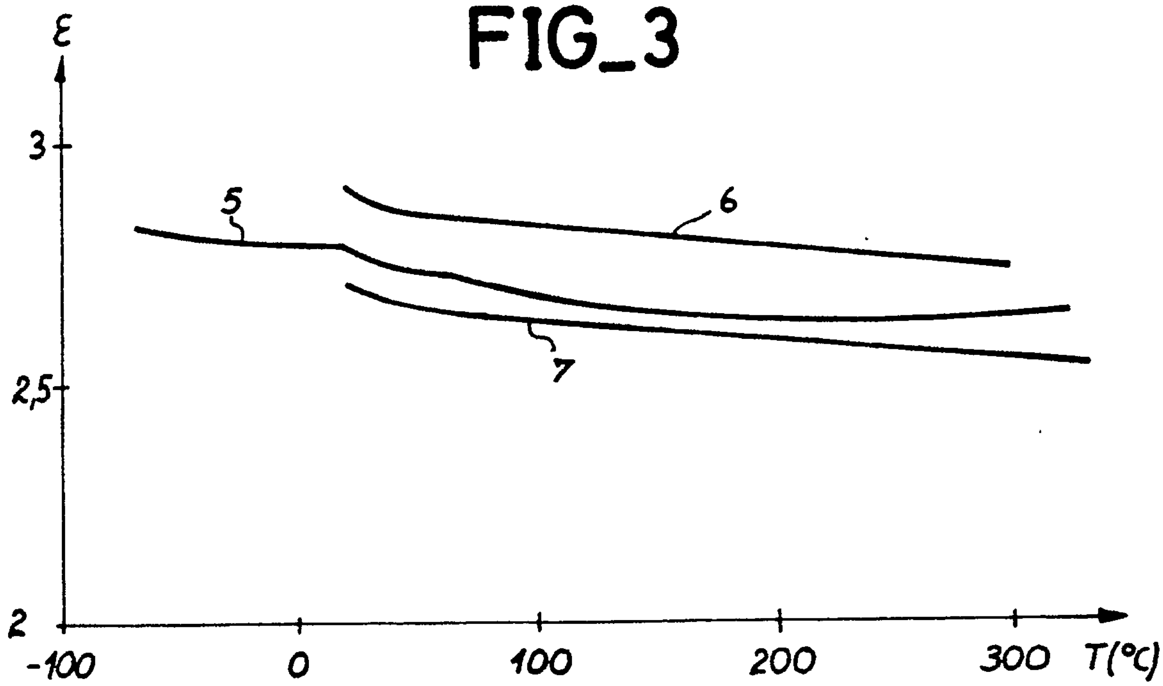


FIG_4

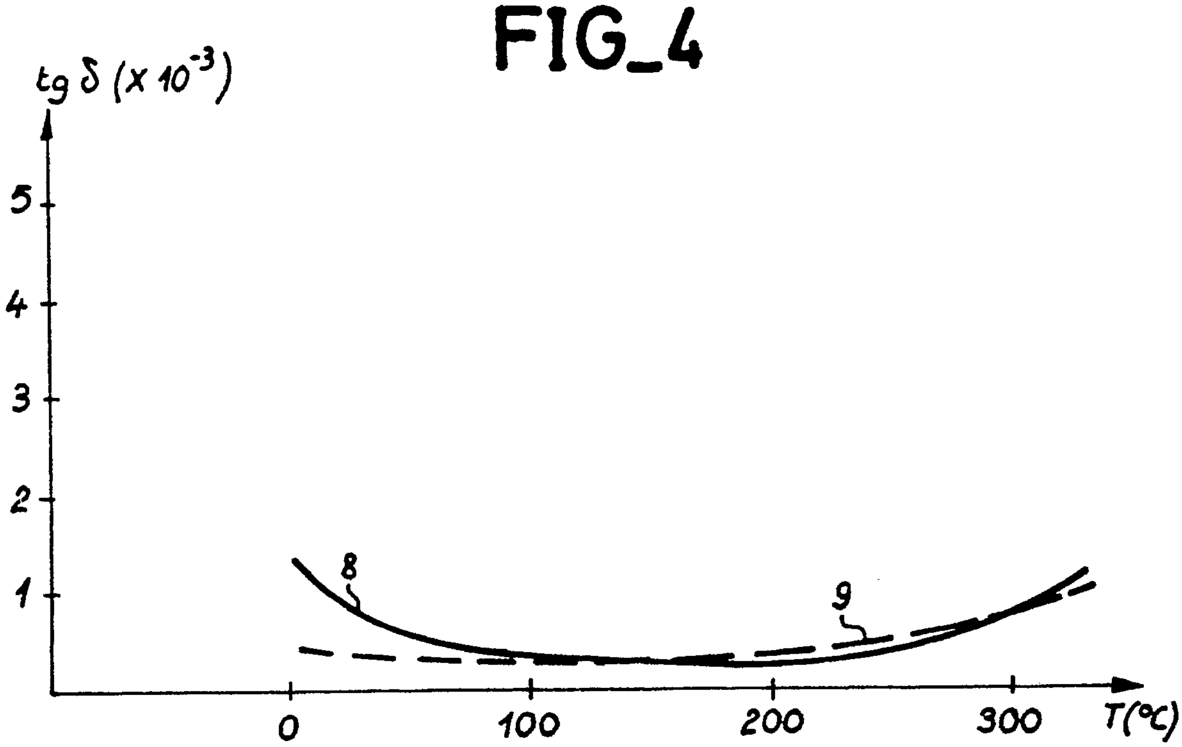

FIG_5

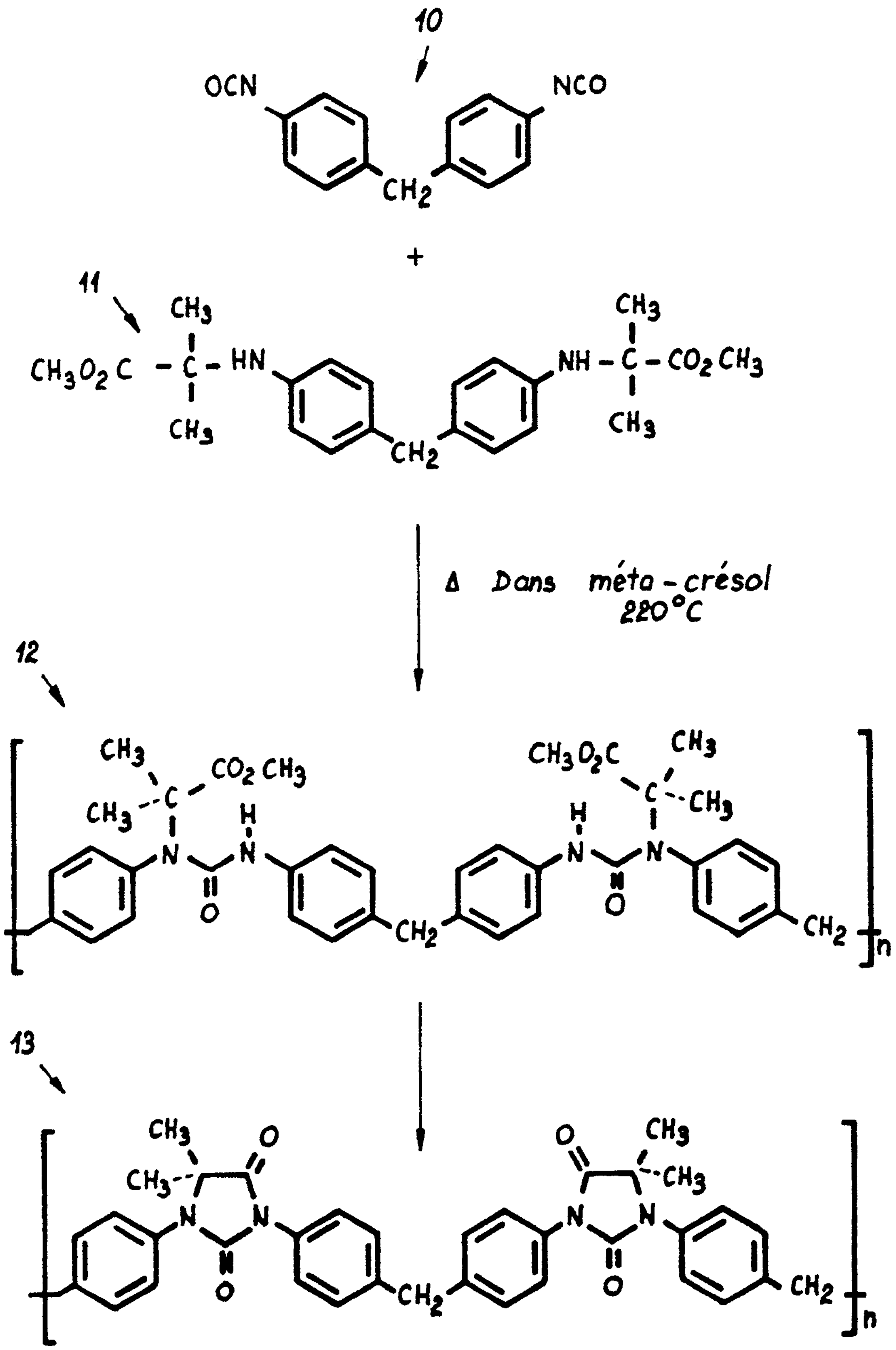

FIG_6

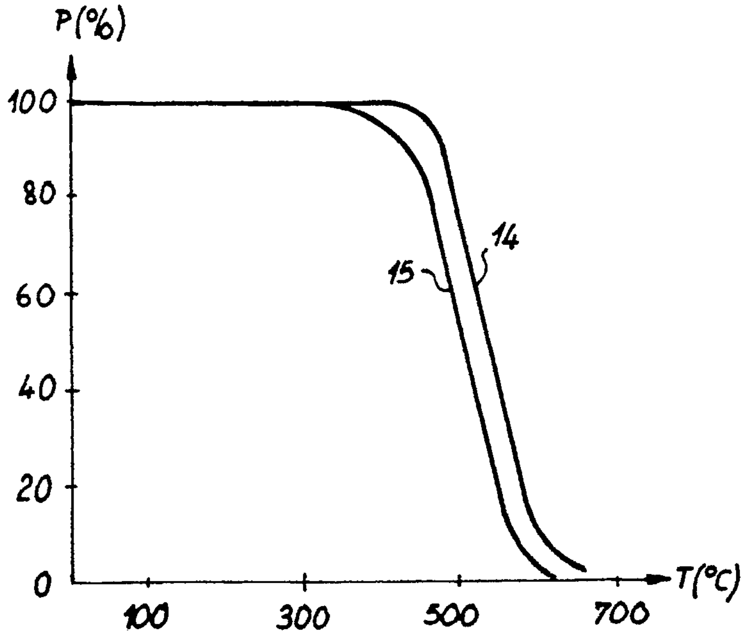


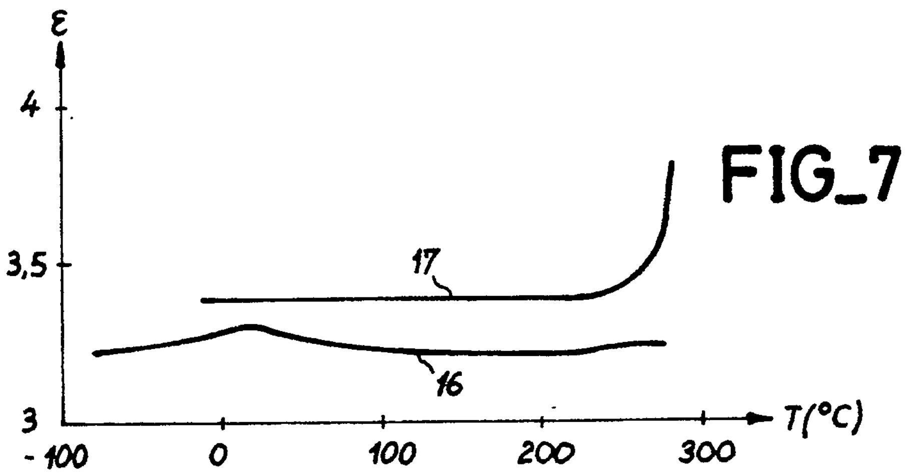


FIG_7

FIG_8

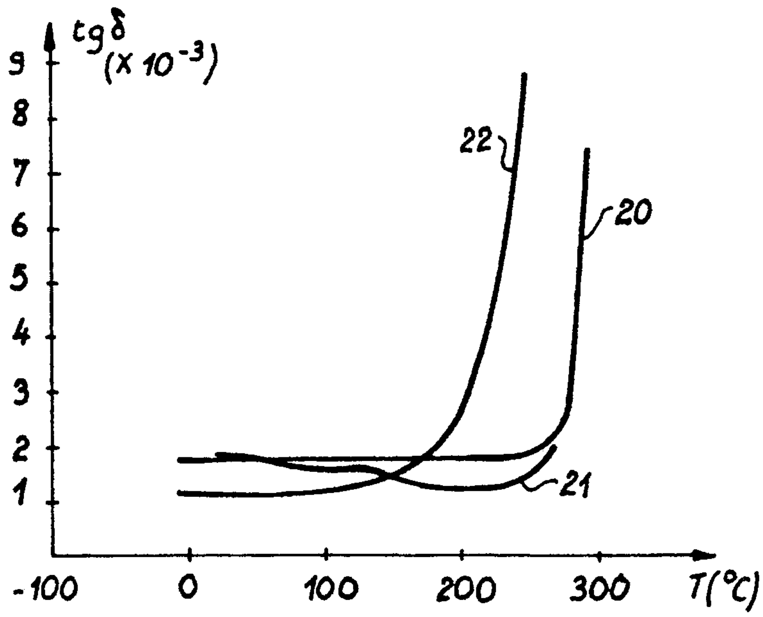

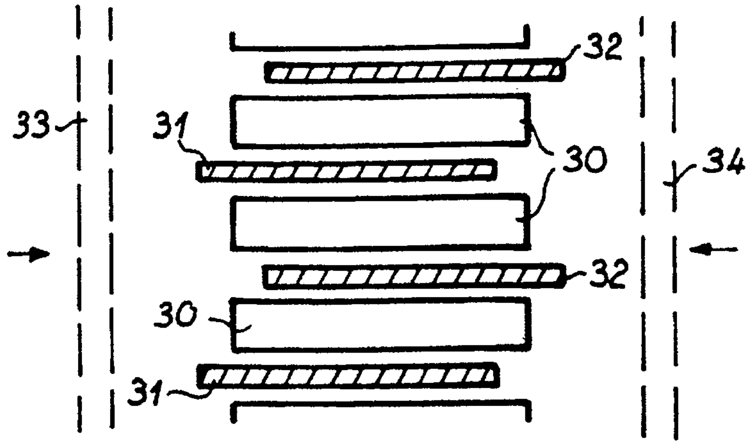

FIG_9

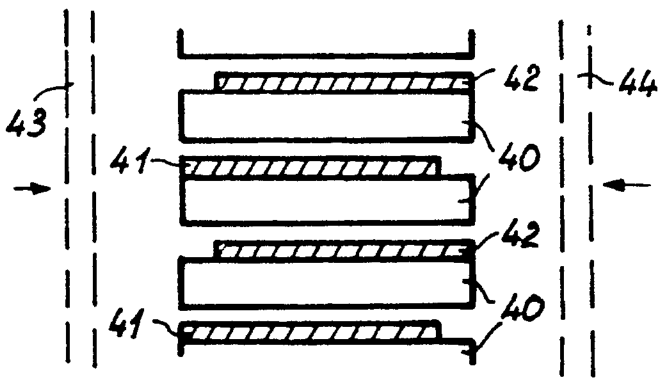

FIG_10

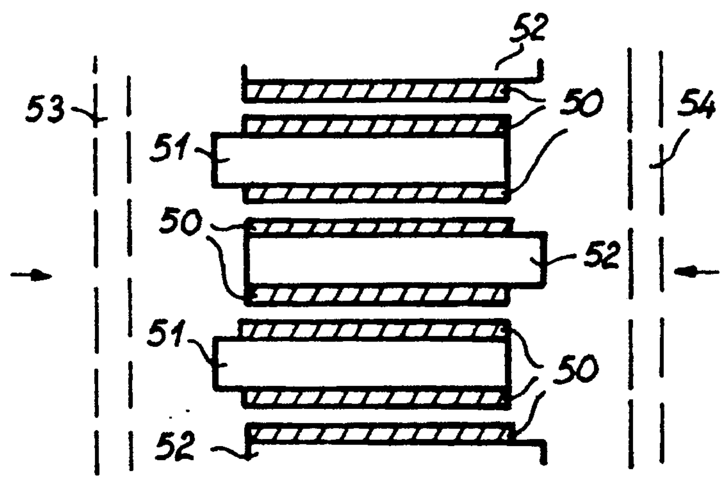

FIG_11

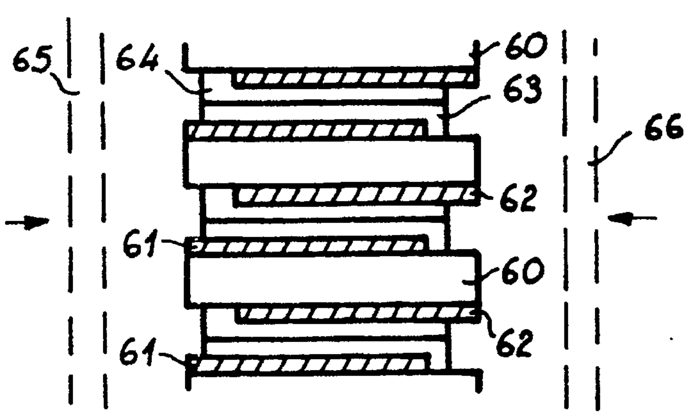

FIG_12